# EUROPEAN PATENT SPECIFICATION

(11) **EP 1 625 640 B1**
(45) Date of publication and mention of the grant of the patent: **08.08.2007**
(21) Application number: 04731657.5
(22) Date of filing: 07.05.2004
(51) Int. Cl.: H01R 12/18, H05K 5/02, G08B 25/12

(54) **CALL POINT FOR ALARM SYSTEM**
NOTRUFSCHALTER FÜR MELDEANLAGE
DECLENCHEUR POUR SYSTEME D'ALARME

(30) Priority: 17.05.2003 GB 0311393
(43) Date of publication of application: 15.02.2006
(73) Proprietor: KAC ALARM COMPANY LIMITED, Redditch, Worchestershire B98 7AH (GB)
(72) Inventor: BOURNE, John Francesco, Bromsgrove, Worcestershire B60 2SA (GB); STRINGFELLOW, Christopher Martin, Alcester, Warwickshire B49 5LH (GB); MORRIS, Neil John, Stourbridge, West Midlands DY8 3BY (GB); VONDRAK, Karl Andrew, Redditch, Worcestershire B98 7EE (GB)
(74) Representative: Shaw, Matthew Nigel
(86) International application number: PCT/GB2004/001974
(87) International publication number: WO 2004/102747

(56) References cited:
- EP-A- 0 488 600
- DE-A- 1 465 423
- "CX MANUAL CALL POINTS" January 2002 (2002-01), FULLEON LIMITED , INTERNET , XP002293307

## Description

### Description of Invention .

This invention relates to a call point for an alarm system, e.g. a fire alarm system.

A typical alarm system in a building for example, includes a number of strategically positioned call points. The call points are connected in one or more electrical circuits to a control station. A person discovering a fire can operate a switch at one of the call points, to cause a change to take place in the electrical circuit by which it is connected to the control station, which change is detected by the control station. The control station then causes an alarm signal to be given by one or more sounders, and may have other functions such as for example summoning the emergency services to the premises.

A call point typically comprises an electrical circuit including a switch whose contacts are normally opened or normally closed. "Normally" refers to the condition in which the call point has not been operated to change the condition of its switch, by a person wishing to give a fire alarm signal. In the former case, a number of call points are connected, in effect, electrically in parallel with one another, and the operation of one of the call points closes the call point circuit so that a current flows therein, which is detected at the control station to give an alarm signal. In the latter, a number of call points are, connected in effect, electrically in series with one another and the normal condition is that a current flows in the circuit containing the call points; when one of the call points is operated the circuit is broken and the current ceases which again is detected at the control station to cause the alarm signal to be given.

Yet a further possibility is that the call point may include a resistor which is brought into or out of circuit when the call point is operated, this change in resistance being detectable e.g. as a current change at the control station, to give an alarm signal.

A typical call point comprises a first part which is adapted to be fixed to the place where the call point is required to be installed, and to receive electrical wires by which the required electrical connections to the call point are established. This first part may form a boxlike back part of the call point. The call point further comprises a second, front, chassis part which closes the front of the back box and contains a displaceable or possibly a frangible element which is manually operable when a person wishes to give an alarm signal. The chassis part also provides a support for the switch whose state is changed to cause the alarm signal to be given, and any other required electrical circuit components of the call point. In the course of installation of the call point, electrical connections as required have to be established between individual circuit elements of the call point (which preferably are disposed on a printed circuit board (PCB) and appropriate individual wires. Hitherto, these connections have been made by engaging the wires with screw-type terminals on the second, chassis, part of the call point or the PCB carried thereby.

This can be inconvenient. According to whether the switch in a call point is required to operate in the "normally open" or "normally closed" mode, either the wires have to be connected to different terminals or a chassis part with at least a different circuit board is required. If a fault develops, testing to establish the nature and/or whereabouts of the fault may require continuity tests to be carried out on the wires connected to a or the call point, and for this to be done it has been necessary to disconnect the wires from the screw terminal connections to the chassis part of the call point. This is time consuming and fiddly.

EP 0488600A discloses a call point and terminal box arrangement in which, for the purpose of facilitating installation, a plug-in connection is provided between a terminal box and call-point. However, the connection provides only for a single mode of operation of the call point, and thus is lacking versatility. The document "CX manual call points" (January 2002 Fulleon Limited) discloses the "CXM" call point with change-over contacts, but with connection provided by a conventional terminal block and thus having the disadvantages described above in relation to conventional terminals.

It is broadly the object of the present invention to address one or more of these problems associated with the connection of existing call points. More specific features and advantages of the invention will be described hereafter.

According to a first aspect of the invention, we provide a call point for an alarm system, comprising a first part adapted to be fixed to a support and to receive electrical wires, and a second part adapted to be secured to the first part and comprising an electrical circuit for operation of the call point, wherein connections between the wires and the electrical circuit of the second part are established by a plug-in connector assembly comprising respective connector elements, connected to the wires and to the electrical circuit of the second part and having plug-in engagement with one another; characterised in that the electrical circuit of the second part includes a circuit board carrying operative electrical components, and comprising at least two connecting portions with which an edge connector element connected to the wires is alternatively engageable, the connecting portions being electrically connected to the operative electrical components of the circuit in different circuit configurations. This enables the call point to operate in different modes according to which of the second connecting portions the first connector element is connected to.

For example, connection of the first connector element to one of the second connector elements may cause the switch of the call point to operate in the "normally open" mode, whilst connection to another may cause it to operate in the "normally closed" mode.

Connection of the electrical wires extending into the first part of the call point to the first connector element may be established by screw terminals. However once such connections have been established, they should not require to be disconnected so repeated operation of the screw terminals is unnecessary.

For testing during installation or maintenance of an alarm system, the possible necessity for establishing electrical connections with the wires leading to the call point by something other than the electrical components of the second part of the call point may be required. To facilitate this, the invention provides that there may be a test connector element with which the first connector element is engageable, the test connector element providing a connection between the wires connected to the first connector element enabling testing, e.g. continuity testing, thereof.

The test connector element conveniently comprises a piece of circuit board material having conductive portions providing an electrical connection between respective contact elements or groups of contact elements in the first connector element.

The first connector element in the form of a circuit board edge connector may comprise a socket formation in which an edge portion of the circuit board is engageable, the edge connector having in its socket formation respective contact elements engageable with respective conductive parts on at least one surface of the circuit board.

Preferably the first connector element comprises contact elements engageable with both surfaces of a circuit board.

If the test connector element has such conductive areas on one of its surfaces only, the possibility that the first connector element may have its contact portions engageable with both sides of a circuit board connecting edge portion means that it does not matter which orientation the test connector element is in when it is engaged with the first connector element.

The first part of the call point preferably comprises a back box for, e.g. wall mounting, while the second part of the call point comprises a front part which fits to the front of the back box and closes it off so that the wires and components therein are inaccessible.

The alarm system call point may comprise switch means operable to change an operating characteristic of the call point.

The operating characteristic which is changed may be the resistance presented by the call point to an electrical circuit in which the call point is connected. This resistance may be presented when a switch, provided in the call point and operable when an alarm signal is to be given, is open or closed.

Such a change in resistance may be effected by switching between different values of resistors incorporated in an electrical circuit of the call point. This aspect of the invention may be provided in combination with other aspects of the invention as herein set forth. In particular, in a call point in which an electrical connection between wires extending to the call point and electrical components for operation of the call point by a connector assembly having first and second connector elements having plug-in engagement with one another, the resistors may be provided as well as two or more second connector elements which connect the electrical components in different modes. Thus the mode of operation of the call point may be easily changed, as well as its resistance if required.

According to another aspect of the invention, we provide a method of installing a call point according to the first aspect of the invention as above set forth, comprising connecting electrical wires of a circuit in which the call point is to be included to the first connector element, and engaging the first connector element with a or the second connector element of the call point.

According to yet another aspect of the invention we provide a method of testing an electrical circuit connected to a call point according to the first aspect of the invention, comprising engaging a test connector element with the first connector element to provide a connection between wires connected to the first connector element.

The invention will now be described by way of example with reference to the accompanying drawings, of which:
FIGURE 1 is a perspective view of a call point for a fire alarm system, in which the invention may be incorporated,
FIGURE 2 is a perspective view of a first, back box, part of the call point,
FIGURE 3 is a perspective view from the rear of a second part of the call point, illustrating the establishment of electrical connection therewith,
FIGURE 4 is a diagram of an electric circuit which may be incorporated in the second part of the call point.

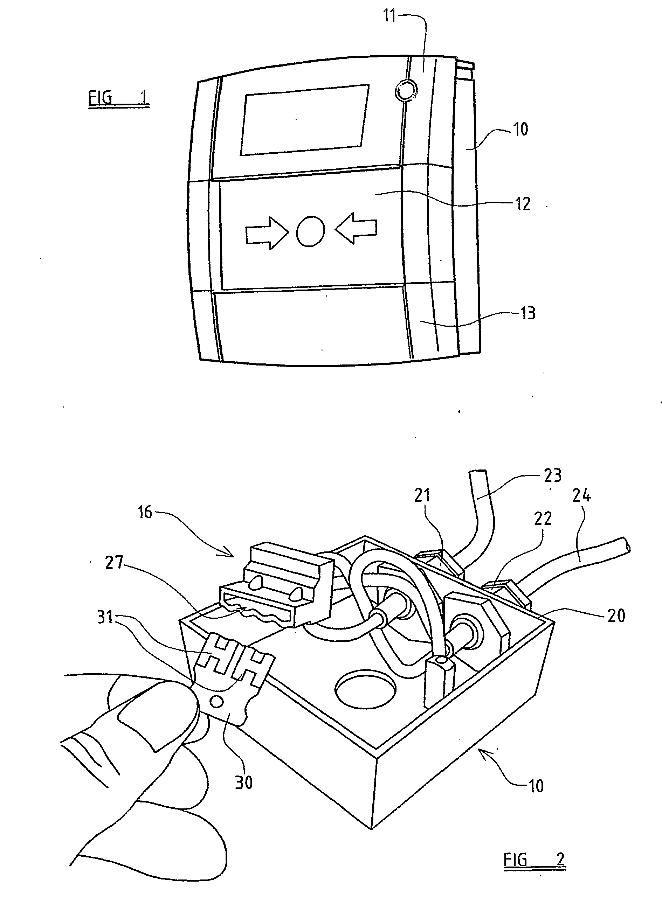

Referring firstly to Figures 1, 2 and 3 of the drawings, these show a call point for a fire alarm system. The call point comprises a first part in the form of a back box 10 which in the present example is adapted to be mounted on a wall surface. The call point further comprises a second part 11 which fits on the front of the back box 10 to close it. The second part comprises a chassis which supports various components including a displaceable element 12 in the form of a pressure plate which is able to be operated by a user who wishes to cause an alarm signal to be given. When the pressure plate 12 is pressed, it may displace in relation to the chassis 11, and cause an electrical switch to be operated to change its condition from its contacts being open to its contacts being closed, or vice versa. In known manner for alarm call points, such displacement of the pressure plate may cause a "flag" to be displayed, to indicate that this call point has been operated and needs to be reset before it can operate again. Such resetting may require the removal of a cover 13 by an authorised person. Such features of an alarm call point are known, and will not be described further hereafter.

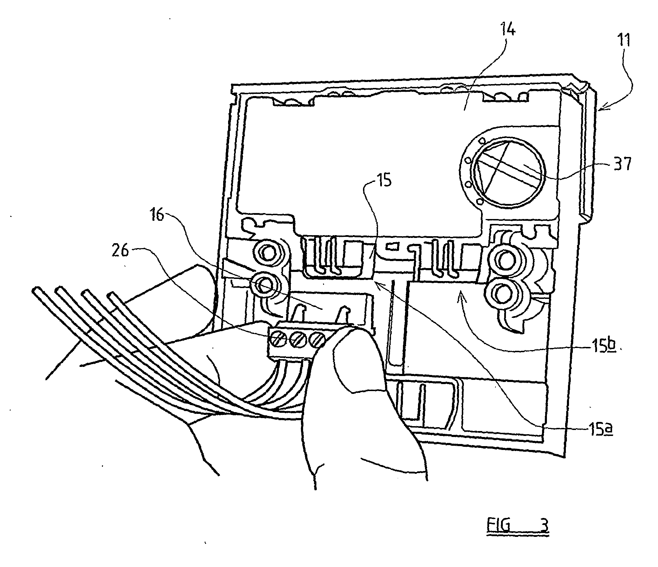

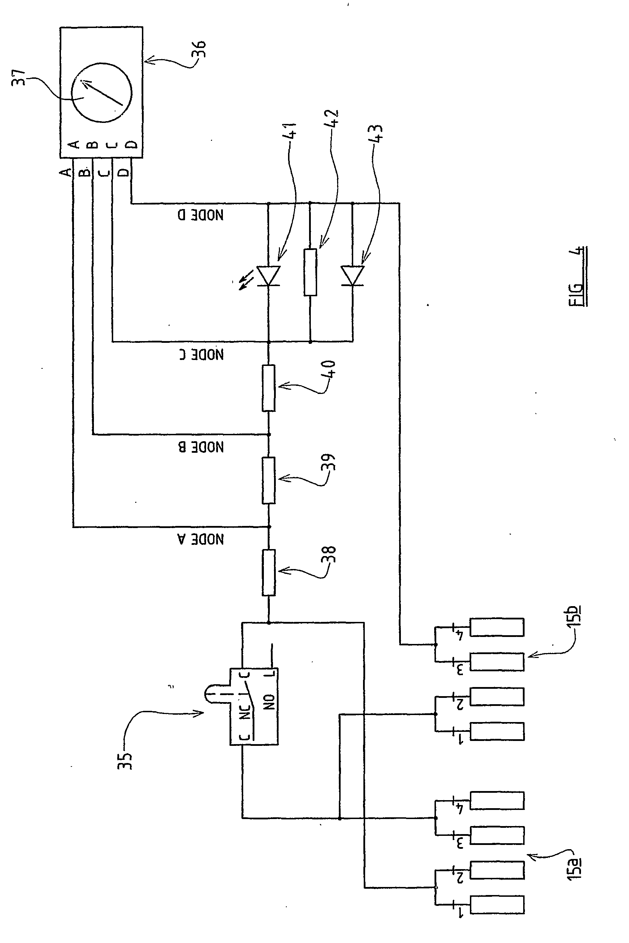

Referring particularly now to Figures 2 and 3 of the drawings, the switch above referred to, which may be a microswitch whose operating element cooperates mechanically, directly or indirectly, with the pressure plate 12, is carried by a sub assembly 14 of electrical components which includes a circuit board 15 by which the components are connected in the required configuration. The circuit board 15 includes two connector portions indicated at 15a, 15b with either of which an edge connector indicated at 16 may be engaged.

Figure 2 shows the configuration of the back box 10 as a substantially rectangular open-faced box in one of whose side walls 20 two glands are provided at 21, 22 through which respective electrical cables 23, 24 can enter the box. The glands, as is well known, incorporate compressible elements which by tightening of a gland nut are compressed radially to grip the exterior covering of the cables.

The individual insulated wires of the cables are connected to a first connector element 16 which is an edge connector element for engagement with a circuit board namely either of the connecting portions 15a, 15b of the circuit board shown in Figure 3. The wires are held to the edge connector 16 by screw terminals as indicated at 26 in Figure 3.

Thus in the course of installation of the call point, the wires in the cables 23, 24 can be connected to the edge connector 16 and secured thereto by use of the screw terminals 26. The second part 11 of the call point need not be present at this time. When the part 11 is to be fitted, the connector element 16 can simply be plug-in fitted to the connecting portion 15a or 15b as required, according to the mode in which the call point is required to function as referred to hereafter.

In the course of installation, or maintenance, of an alarm system or a call point, continuity testing of the circuit(s) in which one or more call points are connected is required. To do this, the connection of respective wires within the cables 23, 24 to one another would be required. In accordance with the invention, this is facilitated by the provision of a test connector element shown at 30 in Figure 2, which is a small piece of circuit board material able to be entered into the socket part (27) of the edge connector 16 and having conductive parts on its surface to connect respective contact elements within the socket 27 to one another. As illustrated, these conductive areas are H-shaped as indicated at 31. It will be appreciated that this considerably facilitates such continuity testing since there is no necessity to disrupt the connections of the wires to the edge connector 16.

Referring now to Figure 4 of the drawings, this shows diagrammatically one arrangement in which electrical components may be disposed on the circuit board 15. The two connecting portions 15a, 15b are illustrated, and it will be noted that the connecting portion 15a provides a direct connection to a switch 35 operable by the pressure plate 12 as above described. The connecting portion 15b provides a connection to the switch 35 by way of a selector switch 36 with a rotary operating element 37 having four positions which provide for the interposition in the connection to the switch 35 of a selected one of a resistor 38, a resistor 39, a resister 40, and a light emitting diode 41 in parallel with a resistor 42 and diode 43. The resistors 38, 39, 40 are of different values from one another, enabling the call point to present a selected resistance to the circuit in which it is connected.

Thus the call point can be connected to provide different modes of operation by selection of the connecting portion 15a or 15b to which the edge connector 16 is engaged. Before or after the connection is made with the connecting portion 15a or 15b the resistance characteristics of the call point can be selected by operation of the switch 36.

In the present specification "comprises" means "includes or consists of" and "comprising" means "including or consisting of".

## Claims

1. A call point for an alarm system, comprising a first part (10) adapted to be fixed to a support and to receive electrical wires (23, 24), and a second part (11) adapted to be secured to the first part and comprising an electrical circuit for operation of the call point, wherein connections between the wires and the electrical circuit of the second part are established by a plug-in connector assembly comprising respective connector elements, connected to the wires and to the electrical circuit of the second part and having plug-in engagement with one another; **characterised in that** the electrical circuit of the second part includes a circuit board (15) carrying operative electrical components, and comprising at least two connecting portions (15a, 15b) with which an edge connector element (16) connected to the wires is alternatively engageable, the connecting portions (15a, 15b) being electrically connected to the operative electrical components of the circuit in different circuit configurations.

2. A call point according to claim 1, further **characterised in that** the edge connector element (16) comprises a socket formation in which each of the connecting portions (15a, 15b) at an edge of the circuit board is engageable, there being respective contact elements in the socket formation engageable with conductive parts on at least one surface of the circuit board.

3. A call point according to claim 2 further **characterised in that** there are contact elements engageable with both surfaces of the circuit board.

4. A call point according to any one of the preceding claims further comprising a test connector element (30) with which the edge connector element (16) is engageable, the test connector element providing a connection between wires connected to the edge connector element enabling testing thereof.

5. A call point according to claim 4 as appendant to claim 2 or claim 3 further **characterised in that** the test connector element (30) comprises a piece of circuit board material having conductive portions providing an electrical connection between respective contact elements or groups of contact elements in the first connector element.

6. A call point according to any one of the preceding claims further **characterised in that** the first part (10) of the call point comprises a back box and the second part (11) of the call point comprises a front part which fits to the front of the back box and closes it off.

7. A call point according to any one of the preceding claims, further comprising switch means (36) operable to change an operating characteristic of the call point.

8. A call point according to claim 7 further **characterised in that** said characteristic is the resistance presented by the call point to an electrical circuit in which it is connected.

9. A call point according to claim 8 wherein said change in resistance is effected by switching between different values of resistors incorporated in an electrical circuit of the call point.

10. A method of installing a call point according to any one of the preceding claims, comprising connecting electrical wires of a circuit in which the call point is to be included to the first connector element, and engaging the edge connector element with a or the second connector element of the call point.

11. A method of testing an electrical circuit connected to a call point according to any one of claims 1 to 9, comprising engaging a test connector element with the edge connector element, to provide a connection between wires connected to the edge connector element enabling testing thereof.

## Patentansprüche

1. Meldestelle für ein Alarmsystem, umfassend einen ersten Teil (10), der zur Befestigung an einer Halterung und zur Aufnahme von elektrischen Drähten (23, 24) gestaltet ist, und einen zweiten Teil (11), der zur Sicherung an dem ersten Teil gestaltet ist und eine elektrische Schaltung zum Betreiben der Meldestelle umfaßt, worin Verbindungen zwischen den Drähten und der elektrischen Schaltung des zweiten Teils durch eine Steckverbindungsanordnung hergestellt werden, die jeweilige Steckerelemente umfaßt, die mit den Drähten und der elektrischen Schaltung des zweiten Teils verbunden sind und miteinander in Steckeingriff stehen, **dadurch gekennzeichnet, daß** die elektrische Schaltung des zweiten Teils eine Leiterplatte (15) enthält, die operative elektrische Komponenten trägt und mindestens zwei Verbindungsabschnitte (15a, 15b) umfaßt, mit denen ein mit den Drähten verbundenes Randsteckerelement (16) alternativ in Eingriff bringbar ist, wobei die Verbindungsabschnitte (15a, 15b) mit den operativen elektrischen Komponenten der Schaltung in verschiedenen Schaltungskonfigurationen elektrisch verbunden sind.

2. Meldestelle nach Anspruch 1, **dadurch gekennzeichnet, daß** das Randsteckerelement (16) eine Sockelausbildung umfaßt, mit der jeder der Verbindungsabschnitte (15a, 15b) an einem Rand der Leiterplatte in Eingriff bringbar ist, wobei jeweilige Kontaktelemente in der Sockelausbildung mit leitfähigen Teilen auf mindestens einer Fläche der Leiterplatte in Eingriff bringbar sind.

3. Meldestelle nach Anspruch 2, **dadurch gekennzeichnet, daß** Kontaktelemente mit beiden Flächen der Leiterplatte in Eingriff bringbar sind.

4. Meldestelle nach einem der vorangehenden Ansprüche, **dadurch gekennzeichnet, daß** sie ferner ein Prüfsteckerelement (30) umfaßt, mit dem das Randsteckerelement (16) in Eingriff bringbar ist, wobei das Prüfsteckerelement eine Verbindung zwischen Drähten, die mit dem Randsteckerelement verbunden sind, zum Prüfen derselben liefert.

5. Meldestelle nach Anspruch 4 in Abhängigkeit von Anspruch 2 oder Anspruch 3, **dadurch gekennzeichnet, daß** das Prüfsteckerelement (30) ein Stück Leiterplattenmaterial mit leitfähigen Abschnitten umfaßt, die eine elektrische Verbindung zwischen jeweiligen Kontaktelementen oder Gruppen von Kontaktelementen in dem ersten Steckerelement liefern.

6. Meldestelle nach einem der vorangehenden Ansprüche, **dadurch gekennzeichnet, daß** der erste Teil (10) der Meldestelle eine hintere Gehäusehälfte umfaßt und der zweite Teil (11) der Meldestelle eine vordere Gehäusehälfte umfaßt, die mit der Vorderseite der hinteren Gehäusehälfte zusammenpaßt und diese verschließt.

7. Meldestelle nach einem der vorangehenden Ansprüche, **dadurch gekennzeichnet, daß** sie ferner eine Schalteinrichtung (36) umfaßt, die zur Änderung einer Betriebseigenschaft der Meldestelle bedienbar ist.

8. Meldestelle nach Anspruch 7, **dadurch gekennzeichnet, daß** die Eigenschaft der Widerstand ist, der durch die Meldestelle einer elektrischen Schaltung geboten wird, in der sie angeschlossen ist.

9. Meldestelle nach Anspruch 8, **dadurch gekennzeichnet, daß** die Widerstandsänderung durch Schalten zwischen verschiedenen Werten von Widerständen bewirkt wird, die in eine elektrische Schaltung der Meldestelle eingebaut sind.

10. Verfahren zum Installieren einer Meldestelle nach einem der vorangehenden Ansprüche, umfassend Verbinden von elektrischen Drähten einer Schaltung, in der die Meldestelle enthalten sein soll, mit dem ersten Steckerelement und In-Eingriff bringen des Randsteckerelements mit einem oder dem zweiten Steckerelement der Meldestelle.

11. Verfahren zum Prüfen einer elektrischen Schaltung, die mit einer Meldestelle gemäß einem der Ansprüche 1 bis 9 verbunden ist, umfassend In-Eingriff-bringen eines Prüfsteckerelements mit dem Randsteckerelement, um eine Verbindung zwischen Drähten, die mit dem Randsteckerelement verbunden sind, zur Prüfung derselben zu liefern.

## Revendications

1. Poste d'alarme incendie pour un système d'alarme, comprenant une première partie (10) conçue pour être fixée à un support et pour recevoir des fils électriques (23, 24), et une deuxième partie (11) conçue pour être attachée à la première partie et comprenant un circuit électrique pour le fonctionnement du poste d'alarme incendie, dans lequel les connexions entre les fils et le circuit électrique de la deuxième partie sont établies grâce à un ensemble de connecteur de branchement comprenant des éléments de connecteur respectifs, connectés aux fils et au circuit électrique de la deuxième partie, et enfichés les uns dans les autres; **caractérisé en ce que** le circuit électrique de ladite deuxième partie inclut une carte de circuits imprimés (15) comportant des composants électriques opérationnels, et comprenant au moins deux parties de connexion (15a, 15b) avec lesquelles un élément de connecteur encartable (16) connecté aux fils peut s'engager selon une autre possibilité, les parties de connexion (15a, 15b) étant connectées électriquement aux composants électriques opérationnels du circuit dans des configurations de circuit différentes.

2. Poste d'alarme incendie selon la revendication 1, **caractérisé en outre en ce que** l'élément de connecteur encartable (16) comprend une formation de socle dans laquelle peut s'engager chacune des parties de connexion (15a, 15b) au niveau d'un bord de la carte de circuits imprimés, les éléments de contact respectifs dans la formation de socle pouvant s'engager avec les parties conductrices sur au moins une surface de la carte de circuits imprimés.

3. Point d'alarme selon la revendication 2, **caractérisé en outre en ce que** des éléments de contact peuvent s'engager avec les deux surfaces de la carte de circuits imprimés.

4. Poste d'alarme incendie selon l'une quelconque des revendications précédentes, comprenant en outre un élément de connecteur d'essai (30) avec lequel l'élément de connecteur encartable (16) peut s'engager, l'élément de connecteur d'essai fournissant une connexion entre les fils connectés à l'élément de connecteur encartable permettant l'essai de celui-ci.

5. Poste d'alarme incendie selon la revendication 4 en dépendance de la revendication 2 ou 3, **caractérisé en outre en ce que** l'élément de connecteur d'essai (30) comprend une pièce du matériau de carte de circuits imprimés ayant des parties conductrices fournissant une connexion électrique entre les éléments de contact respectifs ou les groupes d'éléments de contact dans le premier élément de connecteur.

6. Poste d'alarme incendie selon l'une quelconque des revendications précédentes, **caractérisé en outre en ce que** la première partie (10) du poste d'alarme incendie comprend une boite arrière, et la deuxième partie (11) du poste d'alarme incendie comprend une partie avant qui s'ajuste à l'avant de la boite arrière et la ferme.

7. Poste d'alarme incendie selon l'une quelconque des revendications précédentes, comprenant en outre un moyen de commutation (36), pouvant fonctionner pour changer une caractéristique de fonctionnement du poste d'alarme incendie.

8. Poste d'alarme incendie selon la revendication 7, **caractérisé en outre en ce que** ladite caractéristique est la résistance présentée par le poste d'alarme incendie à un circuit électrique dans lequel il est connecté.

9. Poste d'alarme incendie selon la revendication 8, dans lequel ledit changement de résistance est effectué grâce à une commutation entre des valeurs de résistances différentes intégrées dans un circuit électrique du poste d'alarme incendie.

10. Procédé d'installation d'un poste d'alarme incendie selon l'une quelconque des revendications précédentes, comprenant la connexion de fils électriques d'un circuit dans lequel le poste d'alarme incendie doit être inclus au premier élément de connecteur, et l'engagement de l'élément de connecteur encartable avec un ou le deuxième élément de connecteur du poste d'alarme incendie.

11. Procédé d'essai d'un circuit électrique connecté à un poste d'alarme incendie selon l'une quelconque des revendications 1 à 9, comprenant l'engagement d'un élément de connecteur d'essai avec l'élément de connecteur encartable, pour fournir une connexion entre les fils connectés à l'élément de connecteur encartable permettant l'essai de celui-ci.
